# EUROPEAN PATENT APPLICATION

(11) **EP 3 252 600 A1**
(43) Date of publication of application: **06.12.2017**
(21) Application number: 16743433.1
(22) Date of filing: 27.01.2016
(51) Int. Cl.: G06F 9/46, G06F 9/50, G06F 11/20

(54) **VIRTUAL NETWORK FUNCTION MANAGEMENT DEVICE, SYSTEM, HEALING METHOD, AND PROGRAM**

(30) Priority: 28.01.2015 JP 2015014614
(71) Applicant: NEC Corporation, Tokyo 108-8001 (JP)
(72) Inventor: YABUSHITA, Naoya, Tokyo 108-8001 (JP); MIBU, Ryota, Tokyo 108-8001 (JP); HASHIGUCHI, Atsushi, Tokyo 108-8001 (JP); KANAMORI, Ichiro, Tokyo 108-0073 (JP)
(74) Representative: Reeve, Nicholas Edward
(86) International application number: PCT/JP2016/052380
(87) International publication number: WO 2016/121830

(57) **Abstract**

The present invention contributes to facilitating analysis of a fault content(s) of a VM(s). A virtual network function management apparatus includes: a virtual machine monitoring unit that detects a fault(s) in a virtual machine(s) operating on a virtualized infrastructure management unit that manages a virtualized infrastructure; and a control unit that instructs the virtualized infrastructure control unit to recreate a virtual machine(s) in which a fault(s) has occurred after an image file(s) of the virtual machine(s) in which the fault(s) has occurred is logically updated so that the image file(s) of the virtual machine(s) in which the fault(s) has occurred can be backed up.

## Description

### FIELD

### (REFERENCE TO RELATED APPLICATION)

The present invention is based upon and claims the benefit of the priority of Japanese patent application No. 2015-014614, filed on January 28, 2015, the disclosure of which is incorporated herein in its entirety by reference thereto.

The present invention relates to a virtual network function management apparatus, a system, a healing method, and a program. In particular, it relates to a function of healing a virtual network function(s) operating on a virtualized infrastructure.

### BACKGROUND

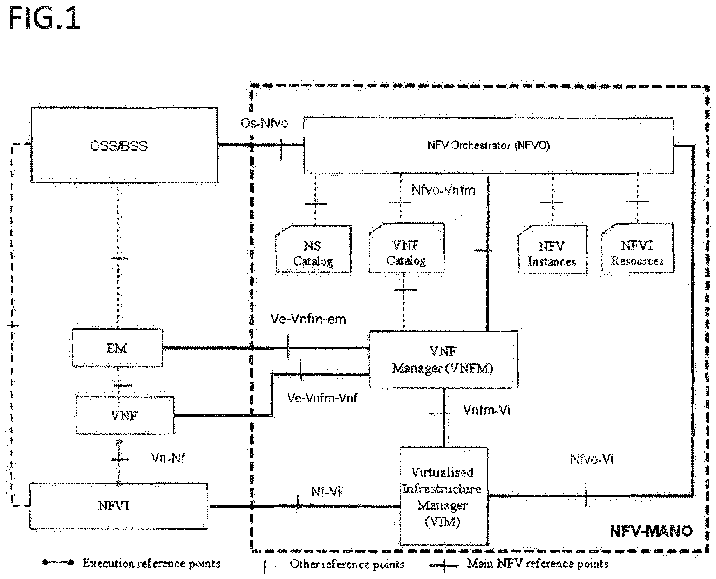

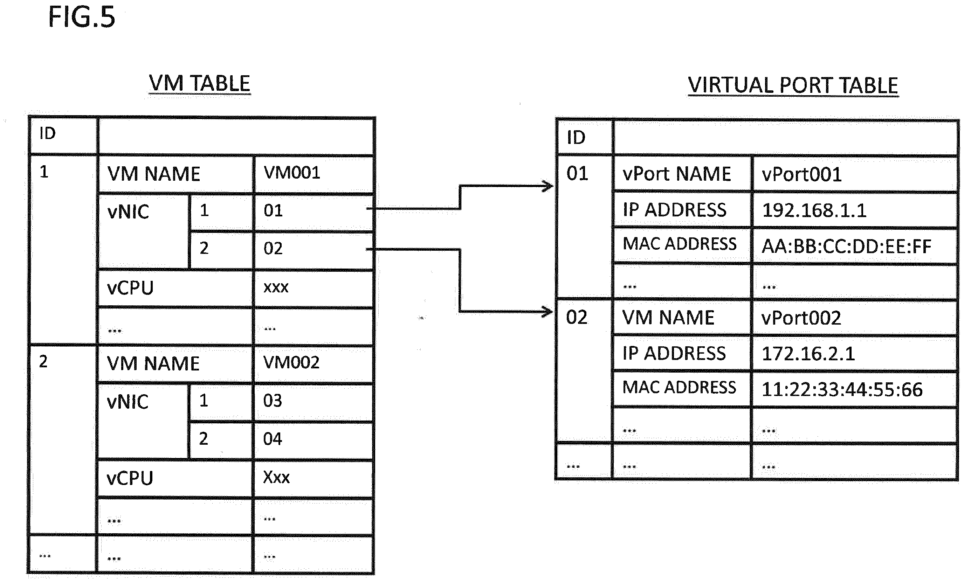

As a technique to virtualize computing, storage, network functions, etc. of a server, for example, there is known NFV (Network Functions Virtualization) that is realized by a virtual machine(s) (VM(s)) implemented as software on a virtual layer such as a HyperVisor on the server. For example, the NFV is realized based on a MANO (Management & Orchestration) architecture. Fig. 1 is Figure 5.1 (The NFV-MANO architectural framework with reference points) on page 23 in NPL 1.

As illustrated in Fig. 1, an individual VNF (Virtual Network Function) corresponds to an application(s), etc. that operates on a virtual machine (VM) on a server and realizes network functions as software. For example, the VNF may realize an MME (Mobility Management Entity), an S-GW (Serving Gateway), a P-GW (PDN Gateway), or the like in EPC (Evolved Packet Core), which is a core network of an LTE (Long Term Evolution) network, by using software (a virtual machine). In the example in Fig. 1, a management function called an EM (Element Manager) is arranged per VNF.

NFVI (Network Function Virtualization Infrastructure) is an execution infrastructure for VNFs. More specifically, the NFVI is an infrastructure where hardware resources of a physical machine (server) such as for computing, storage, of network functions are virtualized in a virtual layer such as a hypervisor to be flexibly used as virtualized hardware resources such as for virtualized computing, virtualized storage, or virtualized networking.

NFV MANO (Management & Orchestration) includes an NFV-Orchestrator (NFVO), a VNF-Manager (VNFM), and a Virtualized Infrastructure Manager (VIM).

The NFV-Orchestrator (NFVO) performs the orchestration of NFVI Resources and the lifecycle management of NSs (Network Services) (instantiation, scaling, termination, update, etc. of NS instances). In addition, the NFVO manages an individual NS Catalog (NSD/VLD/VNFFGD) and an individual VNF Catalog (VNFD/VM images/manifest files, etc.) and holds an NFV Instances repository and an NFVI Resources repository.

The VNF-Manager (VNFM) performs VNF lifecycle management (instantiation, update, query, scaling, termination, (assisted/automated) healing, etc.) and event notification.

The Virtualized Infrastructure Manager (VIM) controls the NFVI via a virtualization layer (computing, storage, network resources management, fault monitoring on the NFVI, which is an NFV execution infrastructure, resource information monitoring, etc.).

OSS (Operation Service Systems) is a general term for systems (apparatuses, software, mechanisms, etc.) needed by telecommunication carriers (carriers) to establish and operate services, for example. BSS (Business Service Systems) is a general term for information systems (apparatuses, software, mechanisms, etc.) that telecommunication carriers (carriers) use for charging usage fees, billing, and customer care, for example.

The NS Catalog represents a repository of Network Services (NS). The NS Catalog supports creation and management of Network Services (NS) deployment templates (Network Service Descriptor (NSD), Virtual Link Descriptor (VLD), and VNF Forwarding Graph Descriptor (VNFFGD)). Deployment means customizing network services in accordance with required specifications, etc. and deploying the customized network services to an actual use environment.

The VNF Catalog represents a repository of VNF Packages. The VNF Catalog supports creation and management of the VNF Packages (VNF Descriptor (VNFD), software images, manifest files, etc.).

The NFV Instances repository holds information about all VNF instances and Network Service (NS) instances. Each VNF instance is represented by a VNF record, and each NS instance is represented by an NS record. These records are updated during the lifecycles of the respective instances, reflecting results of execution of VNF lifecycle management operations and NS lifecycle management operations.

The NFVI Resources repository holds information about available/reserved/allocated resources extracted by the VIM across operator's infrastructure domains.

In Fig. 1, a reference point Os-Nfvo arranged between the OSS (Operation Service Systems)/BSS (Business Service Systems) and the NFVO is a reference point used for network service lifecycle management requests, VNF lifecycle management requests, forwarding of state information regarding NFV, exchanges of policy management information, etc.

A reference point Vnfm-Vi is used for resource allocation requests from the VNFM and exchanges of information about the configuration and state of virtualized resources.

A reference point Ve-Vnfm-em is used between the EM and the VNFM for VNF instantiation, VNF instance query, update, termination, scaling out/in, and scaling up/down, forwarding of configuration and events from the EM to the VNFM, notification of configuration of the VNF and events from the VNFM to the VNF, for example.

A reference point Ve-Vnfm-Vnf is used between the VNF and the VNFM for VNF instantiation, VNF instance query, update, termination, scaling out/in, and scaling up/down, forwarding of configuration and events from the VNF to the VNFM, notification of configuration of the VNF and events from the VNFM to the VNF, for example.

A reference point Nf-Vi is used for giving instructions to manage computing, storage, and network resources and allocation of a VM(s), updating VM resources allocation, VM migration, VM termination, creating and removing connection between VMs, etc., allocation of virtualized resources in response to resources allocation requests, forwarding of state information about virtualized resources, exchanges of configuration and state information about hardware resources, for example.

A reference point Vn-Nf represents an execution environment provided by the NFVI for the VNF.

A reference point Nfvo-Vnfm is used for resource-related requests (authorization, reservation, allocation, etc.) from the VNF-Manager (VNFM), forwarding of configuration information to the VNFM, and collection of state information about the VNF.

A reference point Nfvo-Vi is used when the NVO performs resource reservation, makes allocation requests, and exchanges information about configuration and state of virtualized resources (See NPL 1 for details).

### CITATION LIST

### NON-PATENT LITERATURE

NPL 1: ETSI GS NFV-MAN 001 V1.1.1 (2014-12) Network Functions Virtualization (NFV); Management and Orchestration <http://www.etsi.org/deliver/etsi_gs/NFV-MAN/001 099/001/01.01.01_ 60/gs_NFV-MAN001v010101p.pdf>

### SUMMARY

### TECHNICAL PROBLEM

The following analysis has been made based on the present invention. The above VNF-Manager (VNFM; virtual network function management apparatus) in NPL 1 performs healing processing (hereinafter, simply referred to as "healing") as VNF lifecycle management. In this processing, the VNFM shuts down a virtual machine (hereinafter, referred to as a "VM") in which a fault has occurred and creates a new VM. More specifically, the VNFM performs processing for creating a VM having the same configuration (VM name/IP address/MAC address) as that of the faulty VM, by using VDU (Virtual Deployment Unit) elements held in a VM deployment template called a VNFD (VNF Descriptor) in the VNF Catalog (see "6.3 Virtualized Network Function information elements" in NPL 1). The new VM may be created as a different VM or as the same VM in terms of management.

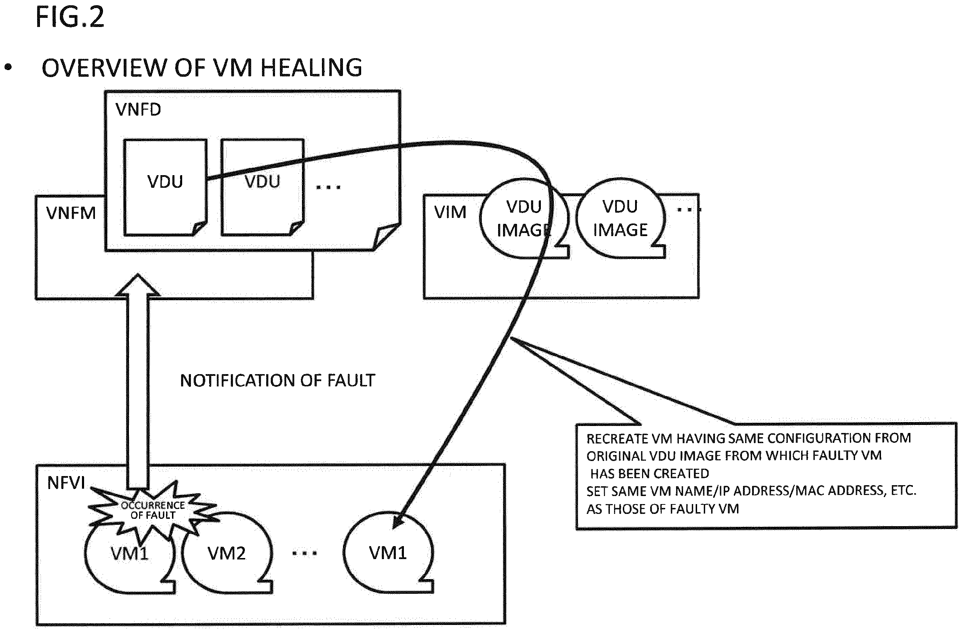

However, as illustrated in Fig. 2, when the above healing is performed, the image file of an original VM is overwritten. Thus, NPL 1 has a problem in that the fault content of the faulty VM cannot be analyzed. The same problem also occurs with the specifications according to 1.1 "Open Stack" in Annex I in NPL 1.

It is an object of the present invention to provide a virtual network function management apparatus, a system, a healing method, and a program that can contribute to facilitating analysis of a fault content(s) of a VM(s).

### SOLUTION TO PROBLEM

According to a first aspect, there is provided a virtual network function management apparatus, including: a virtual machine monitoring unit that detects a fault(s) in a virtual machine(s) operating on a virtualized infrastructure management unit that manages a virtualized infrastructure. The virtual network function management apparatus also includes a control unit that instructs the virtualized infrastructure control unit to recreate a virtual machine(s) in which a fault(s) has occurred after an image file(s) of the virtual machine(s) in which the fault(s) has occurred is logically updated so that the image file(s) of the virtual machine(s) in which the fault(s) has occurred can be backed up.

According to a second aspect, there is provided a virtual network function providing system including the above virtual network function management apparatus.

According to a third aspect, there is provided a healing method including steps of: detecting a fault(s) in a virtual machine(s) operating on a virtualized infrastructure management unit that manages a virtualized infrastructure; and instructing, when a fault(s) has been detected in a virtual machine(s), the virtualized infrastructure control unit to recreate the virtual machine(s) in which the fault(s) has occurred after an image file(s) of the virtual machine(s) in which the fault(s) has occurred is logically updated so that the image file(s) of the virtual machine(s) in which the fault(s) has occurred can be backed up. This method is associated with a certain machine referred to as a virtual network function management apparatus that performs healing on a virtual machine(s).

According to a fourth aspect, there is provided a program executed by a computer that functions as the above virtual network function management apparatus. This program can be recorded in a computer-readable (non-transient) storage medium. Namely, the present invention can be realized as a computer program product.

Each element of the above virtual network function management apparatus, system, virtual machine healing method, and program contributes to solving the above problem.

### ADVANTAGEOUS EFFECTS OF INVENTION

According to the present invention, it is possible to contribute to facilitating analysis of a fault content(s) of a VM(s) that operates on a virtual network function infrastructure (NFVI). In addition, the present invention transforms the above virtual network function management apparatus described in Background into a virtual network function management apparatus whose function of analyzing a fault content(s) of a VM(s) is improved.

### BRIEF DESCRIPTION OF DRAWINGS

Fig. 1 illustrates NFV-MANO in an NFV architecture (cited from Fig. 5.1 in NPL 1).
Fig. 2 illustrates healing processing in the NFV architecture.
Fig. 3 illustrates a configuration of a virtual network function providing system according to a first exemplary embodiment of the present invention.
Fig. 4 illustrates a configuration of a virtual network function management apparatus according to the first exemplary embodiment of the present invention.
Fig. 5 illustrates an overview of an image file of an individual VM managed in an NFV instances repository in an NFVO according to the first exemplary embodiment of the present invention.
Fig. 6 is a sequence diagram illustrating a flow of VM healing processing according to the first exemplary embodiment of the present invention.
Fig. 7 is a sequence diagram illustrating a flow of VM healing processing (including backup processing) according to the first exemplary embodiment of the present invention.
Fig. 8 illustrates change of an image file of a VM according to the first exemplary embodiment of the present invention.
Fig. 9 illustrates change of the image file of the VM according to the first exemplary embodiment of the present invention.
Fig. 10 is a sequence diagram illustrating a flow of VM healing processing according to a second exemplary embodiment of the present invention.
Fig. 11 illustrates change of an image file of a VM according to the second exemplary embodiment of the present invention.
Fig. 12 illustrates change of the image file of the VM according to the second exemplary embodiment of the present invention.
Fig. 13 is a sequence diagram illustrating a VM healing operation according to a third exemplary embodiment of the present invention.
Fig. 14 illustrates a flow of VM healing processing (including backup processing) according to the third exemplary embodiment of the present invention.

### DESCRIPTION OF EMBODIMENTS

### [First exemplary embodiment]

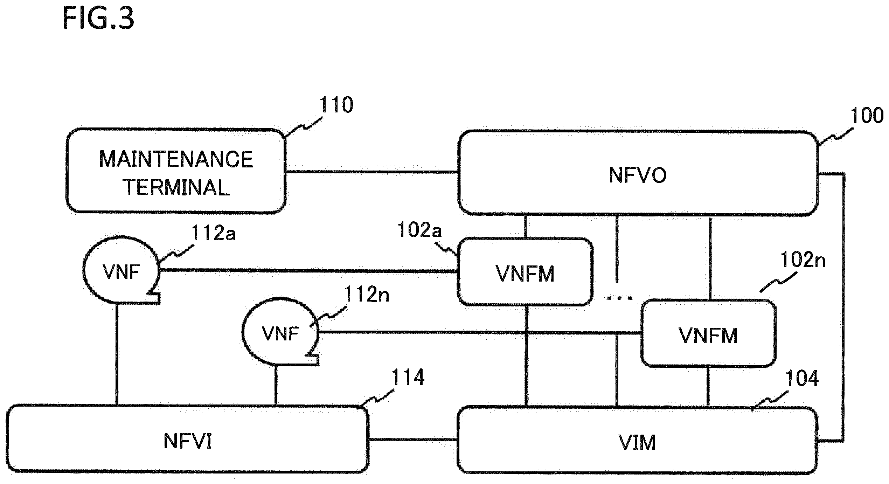

Next, a first exemplary embodiment of the present invention will be described in detail with reference to the drawings. Fig. 3 illustrates a configuration of a virtual network function providing system according to the first exemplary embodiment of the present invention.

Fig. 3 illustrates a configuration in which an NFVO 100 connected to a maintenance terminal 110, n virtual network function management apparatuses (VNFMs 102a to 102n) managing respective VNFs that provide users with virtual network functions, and a VIM 104 controlling a network function virtualization infrastructure (NFVI) 114 that serves as an execution infrastructure for the VNFs are connected with each other.

The NFVO 100 controls the VNFMs 102a to 102n and the VIM 104 in accordance with instructions received from the users via the maintenance terminal 110. In addition, the NFVO 100 provides the maintenance terminal 110 with information needed for operation support of network services, billing management, customer management, etc. In addition, when the NFVO 100 (an orchestration apparatus) according to the present exemplary embodiment is notified by any of the VNFMs 102a to 102n that a faulty VM has been shut down, the NFVO 100 updates a corresponding VM name held in the NFV instances repository held by the NFVO 100 (see "NFV Instances" in Fig. 1).

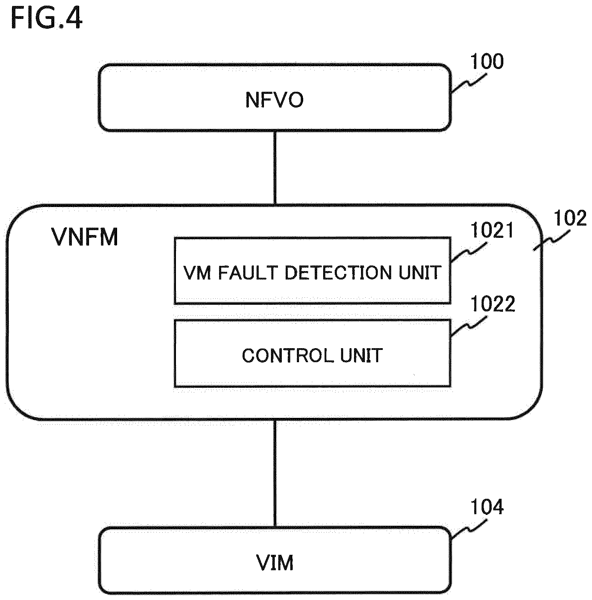

In accordance with instructions from the NFVO 100, the VNFMs 102a to 102n (each of which will simply be referred to as a "VNFM 102" when these VNFMs do not need to be distinguished from one another) manage the lifecycles of the respective VNFs 112a to 112n operating on the virtualized infrastructure (each of the VNFs 112a to 112n will simply be referred to as a "VNF 112" when these VNFs do not need to be distinguished from one another). The VNFM 102 will be described in detail below with reference to Fig. 4.

In accordance with instructions from the NFVO 100, the VIM 104 manages the virtualized infrastructure on which the VNFs 112 operate. As the VIM, a VIM equivalent to that in NPL 1 can be used.

Fig. 4 illustrates a configuration of an individual VNFM 102 according to the first exemplary embodiment of the present invention. As illustrated in Fig. 4, the VNFM 102 includes a VM fault detection unit 1021 and a control unit 1022.

When the VM fault detection unit 1021 receives a notification of occurrence of a fault from the corresponding VNF 112, the VM fault detection unit 1021 requests the control unit 1022 to issue a request to shut down a specific VM to the VIM 104 so that VM healing processing is started. As a mechanism to detect faults in the VNFs, the VM fault detection unit 1021 can also use a known method such as health-check, other than the method described in NPL 1.

In addition to the issuing of requests to shut down a VM to the VIM 104, the control unit 1022 issues requests to delete/delete a VM port and requests to create a VM to the VIM 104.

In addition, the control unit 1022 requests the NFVO 100 to logically update an image file of the faulty VM so that the VIM 104 can perform recreation of the faulty VM. In the present exemplary embodiment, the control unit 1022 requests the NFVO 100 to rename the faulty VM. Alternatively, instead of requesting to rename the VM, the control unit 1022 may request the NFVO 100 to set a predetermined flag in management information, etc. about the corresponding VM. However, the above processing is merely examples, and the present invention is not limited thereto. Namely, it is possible to use another method that enables the recreation of the faulty VM while ensuring a backup of the image file of the faulty VM. For example, instead of performing the above renaming processing, first, the faulty VM may be brought into an inactive state (standby state). Next, the VM may be recreated under a different name. Finally, the VM names of these VMs may be switched.

Fig. 5 illustrates an overview of the image file of an individual VM managed in the NFV instances repository in the NFVO 100 according to the first exemplary embodiment of the present invention. A table (represented as "VM table") on the left side in Fig. 5 is an image diagram illustrating information elements in which the configuration and state of an individual VM are stored. In the example in Fig. 5, a VM whose VM name is VM 001 includes a virtual NIC (network interface card) in which virtual port connection information is set. In addition, in the example in Fig. 5, the state of the VM whose VM name is VM 001 is "active."

A table (represented as "virtual port table") on the right side in Fig. 5 is an image diagram illustrating port information held on the NFVI 114 side. In the example in Fig. 5, the table holds IP addresses and MAC addresses set on two virtual ports of the virtual NIC included in the VM whose VM name is VM 001. On the NFVI 114 side, these addresses are used to determine destination and source VMs of packets.

In the following description, VM names are changed by using a predetermined rule. For example, "-bk" is added to the VM name "VM 001" to obtain a VM name "VM 001-bk." However, the predetermined rule is not limited to the above example. Namely, a different rule may be used as long as the new VM name does not conflict any of the existing VM names. For example, a new VM name may be set by adding the date or time of update to the file name (for example, "VM001-20150101") or by replacing a part of the characters of the original VM name by predetermined reserved characters (for example, replacing "VM 001" by "BK 001").

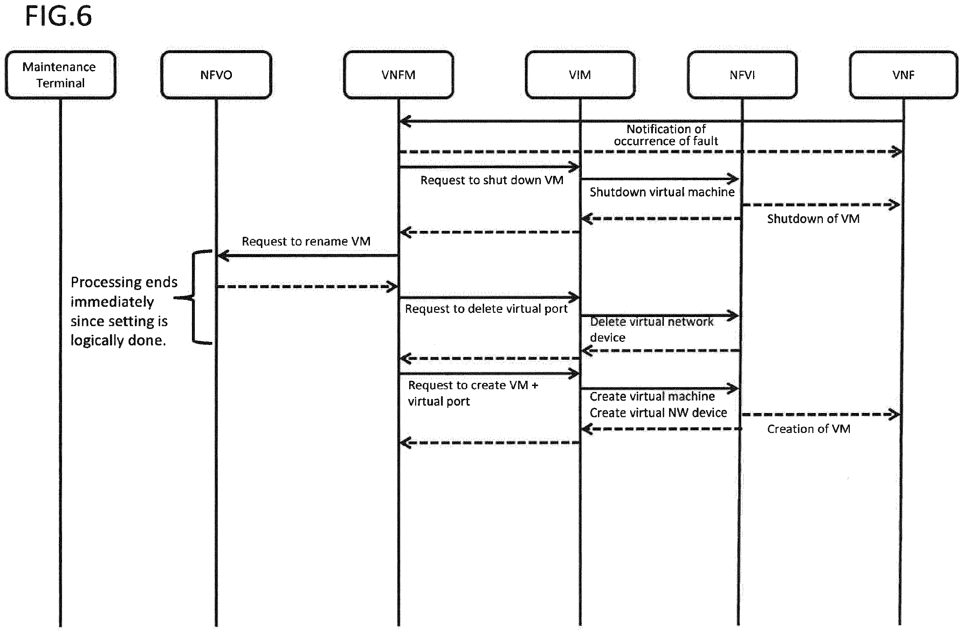

Next, an operation according to the present exemplary embodiment will be described in detail with reference to the drawings. Fig. 6 is a sequence diagram illustrating a flow of VM healing processing according to the first exemplary embodiment of the present invention. As illustrated in Fig. 6, first, when a VNFM 102 receives a notification of occurrence of a fault from a VNF 112, the VNFM 102 requests the VIM 104 to shut down the VM that corresponds to the faulty VNF ("Request to shut down VM" in Fig. 6).

When receiving the request to shut down the VM from the VNFM 102, the VIM 104 instructs the NFVI 114 to shut down the VM ("Shutdown virtual machine" in Fig. 6).

When the NFVI 114 receives the instruction to shut down the VM from the VIM 104, the NFVI 114 shuts down the corresponding VM (VNF) ("Shutdown of VM" in Fig. 6). When the VM has been shut down, the NFVI 114 notifies the VNFM of the completion of the shutdown of the VM via the VIM 104.

When the VNFM 102 is notified of the completion of the shutdown of the VM via the VIM 104, the NFVM 102 requests the NFVO 100 to rename the corresponding VM. The NFVO 100 refers to the NFV instances repository and renames the VM as requested by the VNFM 102. As illustrated in Fig. 6, the NFVO 100 renames the VM by modifying logical information alone. As is easily understood, this renaming processing is completed much faster than performing full-backup of the image file.

After the NFVO 100 notifies the VNFM 102 of the completion of the renaming of the VM name, the VNFM 102 requests the VIM 104 to delete corresponding virtual port information ("Request to delete virtual port" in Fig. 6).

When receiving the request to delete the virtual port information, the VIM 104 instructs the NFVI 114 to delete the specified virtual port information (see the table on the right side in Fig. 5) ("Delete virtual network device in Fig. 6). When the virtual port information has been deleted, the NFVI 114 notifies the VNFM 102 of the completion of the deletion of the virtual port information via the VIM 104.

When the renaming of the VM and the deletion of the virtual port information have been completed, the NFVO 100 recognizes that a VM having the name of the faulty VM does not exist. In addition, since the virtual port information does not exist, the NFVI 114 (VIM 104) side also recognizes that the corresponding VM does not exist. Next, the VNFM 102 instructs the VIM 104 to create virtual port information and the VM in which the fault has occurred ("Request to create VM + virtual port" in Fig. 6).

When receiving the request to create virtual port information and the VM in which the fault has occurred from the VNFM 102, the VIM 104 instructs the NFVI 114 to create the requested virtual port information and VM ("Create virtual machine, Create NW Device" in Fig. 6).

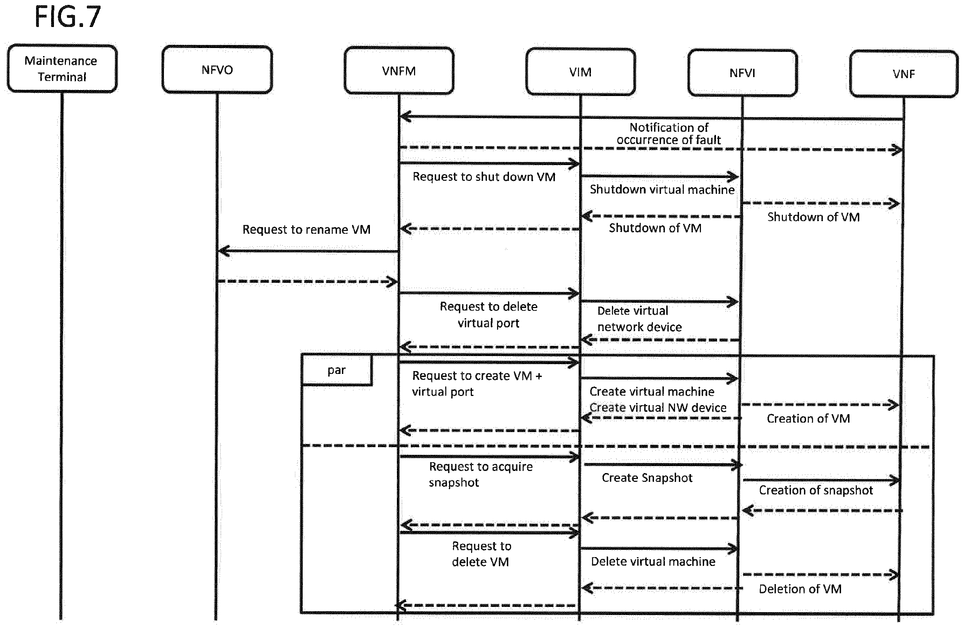

In this way, the creation of the VM has been completed. Fig. 7 is a sequence diagram in which a flow of VM image file backup processing performed in parallel with the creation of the VM is added to the flow in Fig. 6. As illustrated in Fig. 7, the VNFM 102 requests the VIM 104 to acquire a snapshot (a backup) of the image file of the renamed VM described above ("Request to acquire snapshot" in Fig. 7).

When receiving the request to acquire a snapshot (a backup) of the image file of the VM from the VNFM 102, the VIM 104 specifies the above renamed VM and instructs the NFVI 114 to acquire the snapshot (backup of the image file) ("Create Snapshot" in Fig. 7). When receiving the instruction, the NFVI 114 acquires the snapshot (backup) of the corresponding VNF 112 ("Creation of snapshot" in Fig. 7). After acquiring the snapshot, the NFVI 114 notifies the VNFM 102 of the completion of the acquisition of the snapshot via the VIM 104.

After the completion of the acquisition of the snapshot, the VNFM 102 instructs the VIM 104 to delete the renamed VM ("Request to delete VM" in Fig. 7).

When receiving the request to delete the renamed VM from the VNFM 102, the VIM 104 instructs the NFVI 114 to delete the renamed VM ("Delete virtual machine" in Fig. 7).

When the VM has been deleted, the NFVI 114 notifies the VNFM 102 of the completion of the deletion of the VM.

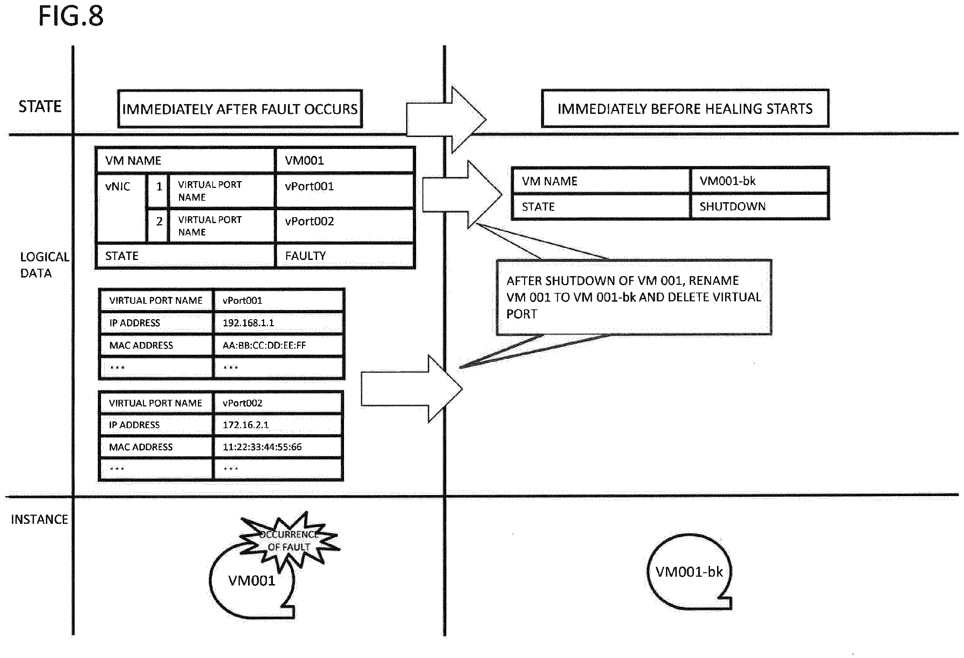

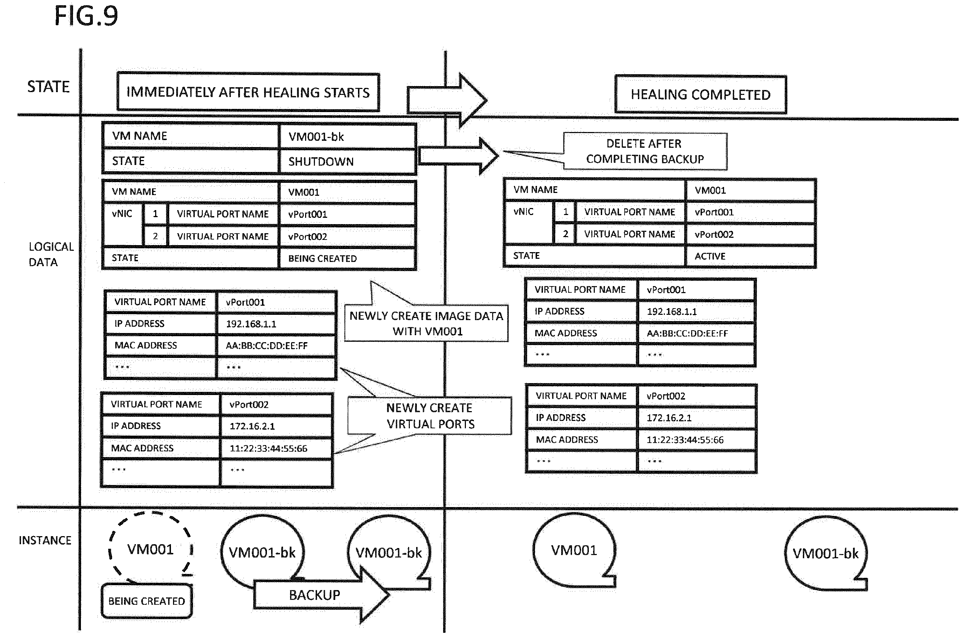

Figs. 8 and 9 illustrate change of the image file of the VM in the above sequence. As illustrated in Fig. 8, for example, when a fault occurs in a VM whose VM name is VM 001, the corresponding VNFM 102 instructs the VIM 104 to shut down the VM. Next, the VNFM 102 requests the NFVO 100 to rename the VM whose VM name is VM 001 to "VM 001-bk." In addition, the VNFM 102 requests the VIM 104 to delete the virtual port information (see two tables illustrated in the lower portion in Fig. 8) corresponding to the virtual ports set in the virtual NIC of the VM whose VM name is VM 001. By performing the above processing, as illustrated on the right side in Fig. 8, the instance of the VM whose VM name is VM 001 is replaced by VM 001-bk, and the virtual port information is deleted.

When the renaming of the VM whose VM name is VM 001 to VM 001-bk and the deletion of the virtual port information have been completed, the VNFM 102 newly creates image data of the VM whose VM name is VM 001 and corresponding virtual port information as illustrated on the left side in Fig. 9. In this way, as illustrated in the lower left portion in Fig. 9, the instance of the VM whose VM name is VM 001 and the instance of the VM whose VM name is VM 001-bk coexist. As described above, the backup (the acquisition of a snapshot) of the image file of the VM whose VM name is VM 001-bk can be performed in parallel with the creation of the image data of the VM whose VM name is VM 001.

After the backup (the acquisition of a snapshot) of the image file of the VM whose VM name is VM 001-bk has been completed, the VNFM 102 deletes the image file of the VM whose VM name is VM 001-bk. As a result, as illustrated on the right side in Fig. 9, the state in which the VM whose VM name is VM 001 does not have a fault can be restored.

As described above, the present exemplary embodiment enables acquisition of backups of image files of VMs while achieving high-speed healing. In particular, the healing processing according to the present exemplary embodiment can be started faster than that according to the following third exemplary embodiment. In addition, in the present exemplary embodiment, the backup processing (the acquisition of the snapshot) of the image file of the VM is performed in synchronization with the healing processing. However, the backup processing (the acquisition of the snapshot) of the image file of the VM itself may be performed asynchronously with the healing processing at arbitrary timing.

### [Second exemplary embodiment]

Next, a second exemplary embodiment will be described in detail with reference to the drawings. In the second exemplary embodiment, the virtual port information deletion processing according to the first exemplary embodiment can be omitted. Since the present exemplary embodiment can be realized by the same configuration as that according to the first exemplary embodiment, the following description will be made with a focus on the differences therebetween.

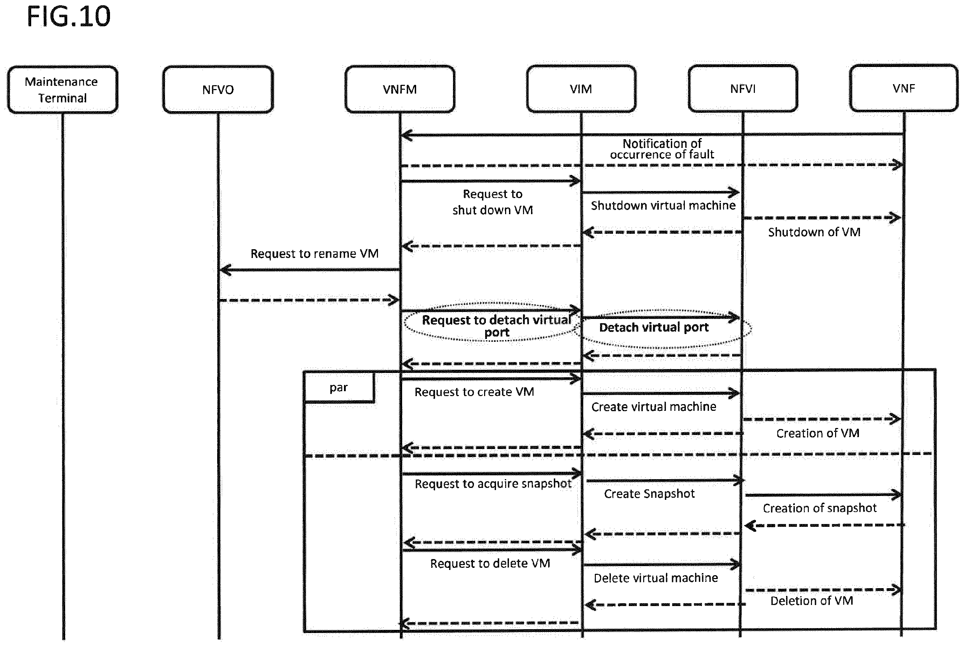

Fig. 10 is a sequence diagram illustrating a flow of VM healing processing according to the second exemplary embodiment of the present invention. Portions inside circles indicated by dashed lines in Fig. 10 are the differences between the first and second exemplary embodiments. As illustrated in Fig. 10, the processing according to the second exemplary embodiment is the same that according to the first exemplary embodiment until the VNFM 102 requests the NVFO 100 to rename the faulty VM.

When the VNFM 102 receives the notification of the completion of the renaming of the VM from the NVFO 100, the VNFM 102 requests the VIM 104 to delete the virtual port information set in the virtual NIC information in the image file of the renamed VM and detach the virtual ports of the VM ("Request to detach virtual port" in Fig. 10).

When receiving the request to detach the virtual ports, the VIM 104 instructs the NFVI 114 to detach the virtual ports of the corresponding VM ("Detach virtual port" in Fig. 10).

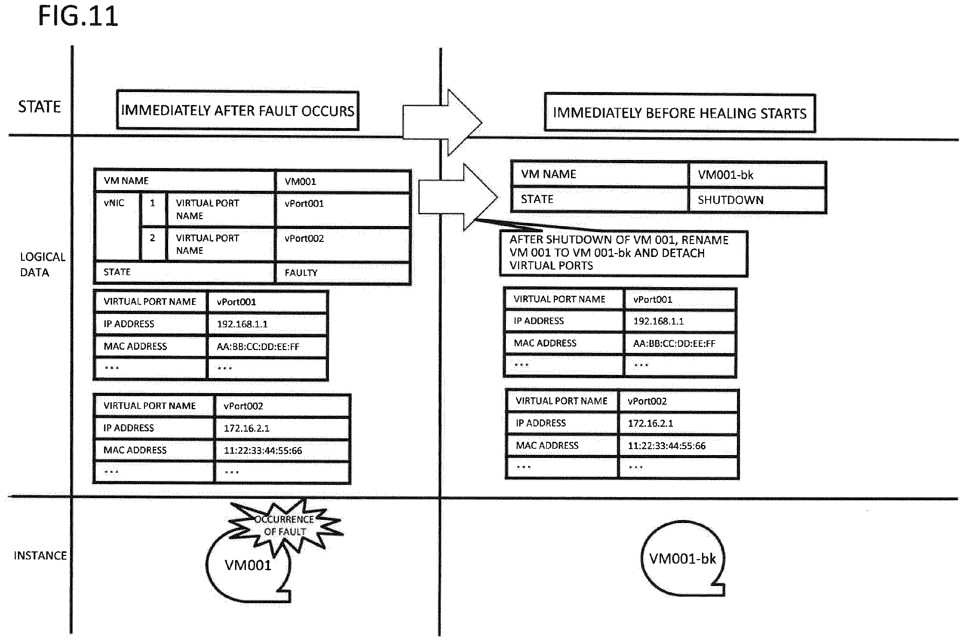

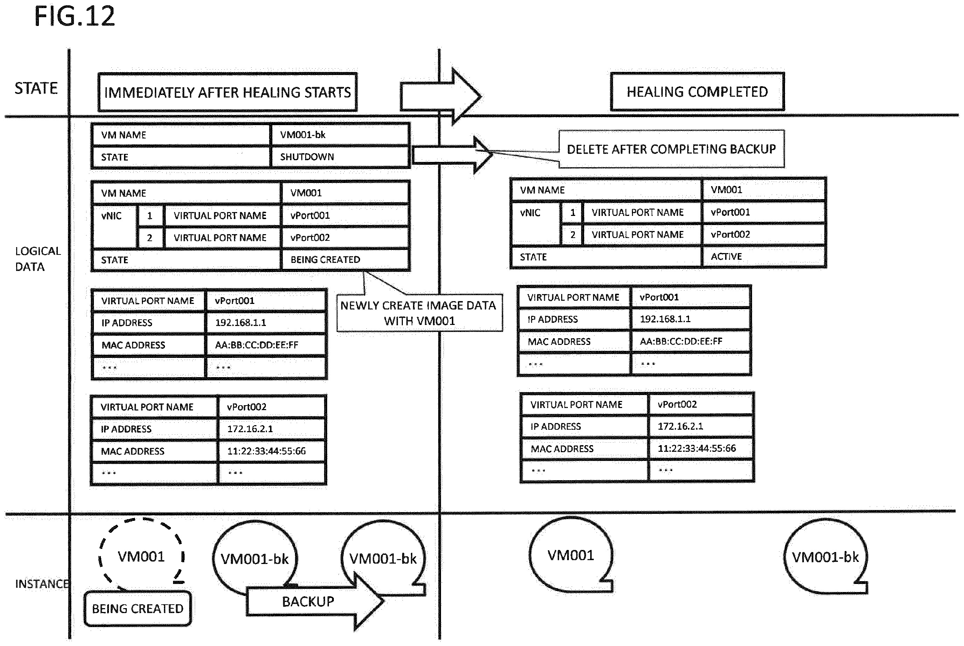

Figs. 11 and 12 illustrate change of the image file of the VM in the above sequence. As illustrated in Fig. 11, for example, when a fault occurs in the VM whose VM name is VM 001, the corresponding VNFM 102 instructs the VIM 104 to shut down the VM. Next, the VNFM 102 requests the NFVO 100 to rename the VM whose VM name is VM 001 to "VM 001-bk." The processing up to this step is the same as that according to the first exemplary embodiment. In the present exemplary embodiment, the VNFM 102 requests the VIM 104 to delete the virtual ports set in the virtual NIC of the VM whose VM name is VM 001-bk. By performing the above processing, as illustrated on the right side in Fig. 11, the instance of the VM whose VM name is VM 001 is replaced by VM 001-bk, and the virtual port connection information set in the virtual NIC of the VM is deleted.

After the VM whose VM name is VM 001 is renamed to VM 001-bk and the virtual port connection information set in the virtual NIC is deleted, the VNFM 102 newly creates image data of the VM whose VM name is VM 001 and corresponding virtual port information, as illustrated on the left side in Fig. 12. In this way, as illustrated in the lower left portion in Fig. 12, the instance of the VM whose VM name is VM 001 and the instance of the VM whose VM name is VM 001-bk coexist. As described above, in the present exemplary embodiment, too, the backup (the acquisition of a snapshot) of the image file of the VM whose VM name is VM 001-bk can be performed in parallel with the creation of the image data of the VM whose VM name is VM 001.

After the backup (the acquisition of the snapshot) of the image file of the VM whose VM name is VM 001-bk has been completed, the image file of the VM whose VM name is VM 001-bk is deleted. As a result, as illustrated on the right side in Fig. 9, the state in which the VM whose VM name is VM 001 does not have a fault can be restored.

As described above, the present exemplary embodiment also enables acquisition of backups of image files of VMs while achieving high-speed healing. In particular, the present exemplary embodiment is more advantageous than the first exemplary embodiment in that the deletion and recreation of the virtual port information can be omitted.

### [Third exemplary embodiment]

Next, a third exemplary embodiment, which also serves as a comparative example with respect to the above first and second exemplary embodiments, will be described in detail with reference to the drawings. Since the present exemplary embodiment can be realized by the same configuration as that according to the first and second exemplary embodiments, the following description will be made with a focus on the difference therebetween.

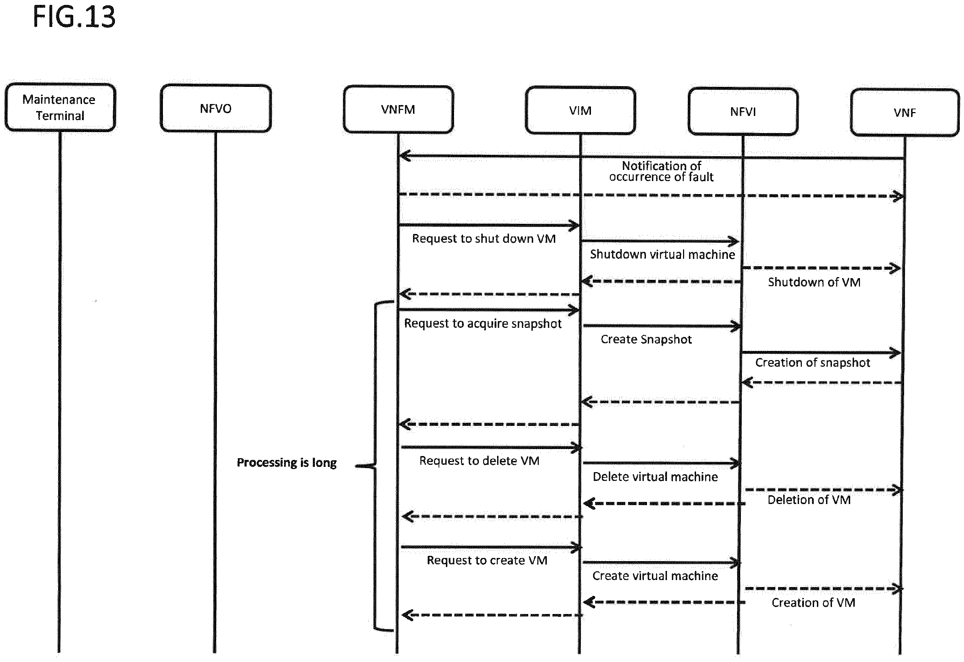

Fig. 13 is a sequence diagram illustrating a flow of healing processing according to the third exemplary embodiment of the present invention. The difference between the first and second exemplary embodiments and the third exemplary embodiment is that, after a faulty VM is shut down, a snapshot (backup) of an image file of the shutdown VM is acquired first.

Next, when the acquisition of the snapshot (backup) of the shutdown VM has been completed, the VNFM 102 deletes the VM from which the snapshot (backup) has been acquired. Next, the VNFM 102 creates a VM.

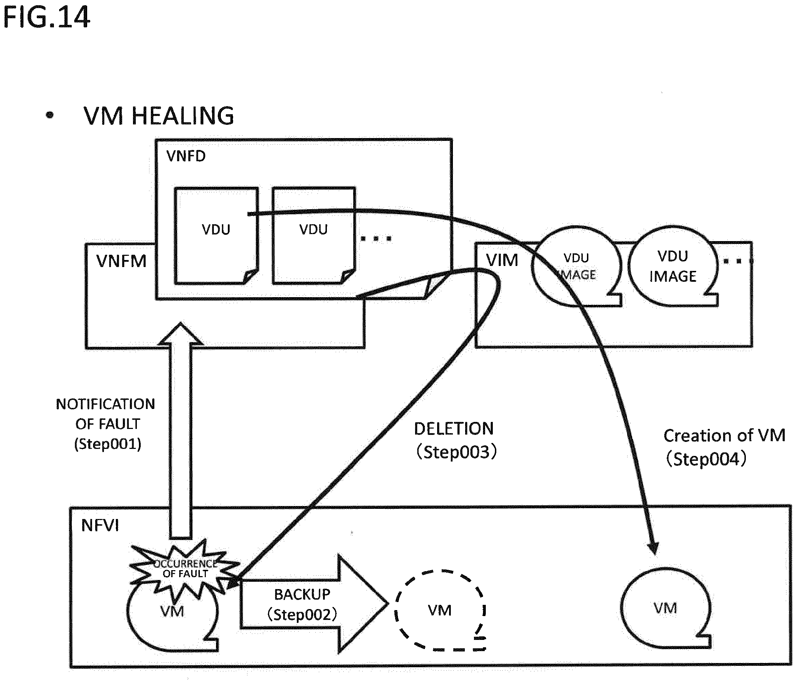

Fig. 14 illustrates a flow of the VM healing processing (including backup processing) according to the third exemplary embodiment of the present invention. In the third exemplary embodiment, when a fault occurs in a VM (Step 001), first, a snapshot (backup) of an image file of the VM is acquired (Step 002).

Next, when the acquisition of the snapshot (backup) has been completed, the VNFM 102 deletes the image file of the faulty VM (Step 003). Next, when the image file of the VM has been deleted, a VM is created by using a VDU image extracted from a corresponding VDU (Step 004).

As described above, according to the present exemplary embodiment, too, a backup of the image file of the VM can be acquired.

In addition, an individual one of the apparatuses configuring the NFV providing systems illustrated in Figs. 1, 3, and 4 and the processing means in the apparatuses may be realized by a computer program which causes a computer that constitutes a corresponding one of the apparatuses to use its hardware and perform corresponding processing described above.

While exemplary embodiments of the present invention have thus been described, the present invention is not limited thereto. Further variations, substitutions, or adjustments can be made without departing from the basic technical concept of the present invention. For example, the configurations of the networks, the configurations of the elements, and the representation modes of the messages illustrated in the drawings have been used only as examples to facilitate understanding of the present invention. Namely, the present invention is not limited to the configurations illustrated in the drawings.

Finally, suitable modes of the present invention will be summarized.

### [Mode 1]

(See the virtual network function management apparatus according to the above first aspect)

### [Mode 2]

The virtual network function management apparatus according to mode 1, wherein the virtual network function management apparatus logically updates the image file(s) of the virtual machine(s) in which the fault(s) has occurred by requesting a predetermined orchestration apparatus (NFVO) to rename the virtual machine(s) in which the fault(s) has occurred.

### [Mode 3]

The virtual network function management apparatus according to mode 1 or 2, wherein the virtual network function management apparatus performs processing for detaching a virtual connection port(s) of the virtual machine(s) in which the fault(s) has occurred.

### [Mode 4]

The virtual network function management apparatus according to any one of modes 1 to 3, wherein the virtual network function management apparatus deletes, among virtual port information held on the virtualized infrastructure management unit side, virtual port information corresponding to a virtual port(s) included in the image file(s) of the virtual machine(s) in which the fault(s) has occurred.

### [Mode 5]

The virtual network function management apparatus according to any one of modes 1 to 4, wherein the virtual network function management apparatus backs up the image file(s) of the virtual machine(s) in which the fault(s) has occurred independently of the processing for recreating the virtual machine(s).

### [Mode 6]

(See the virtual network function providing system according to the above second aspect)

### [Mode 7]

(See the healing method according to the above third aspect)

### [Mode 8]

(See the program according to the above fourth aspect)

The above modes 6 to 8 can be expanded to modes 2 to 5 in the same way as mode 1 is expanded to modes 2 to 5.

The disclosure of the above NPL is incorporated herein by reference thereto. Variations and adjustments of the exemplary embodiments and examples are possible within the scope of the overall disclosure (including the claims) of the present invention and based on the basic technical concept of the present invention. Various combinations and selections of various disclosed elements (including the elements in each of the claims, exemplary embodiments, examples, drawings, etc.) are possible within the scope of the disclosure of the present invention. Namely, the present invention of course includes various variations and modifications that could be made by those skilled in the art according to the overall disclosure including the claims and the technical concept. The description discloses numerical value ranges. However, even if the description does not particularly disclose arbitrary numerical values or small ranges included in the ranges, these values and ranges should be deemed to have been specifically disclosed.

### REFERENCE SIGNS LIST

100 NFVO
102a to 102n VNFM (virtual network function management apparatus)
104 VIM
110 maintenance terminal
112a to 112nVNF (virtual network function)
114 NFVI (network function virtualization infrastructure)
1021 VM fault detection unit
1022 control unit

## Claims

1. A virtual network function management apparatus, comprising:
a virtual machine monitoring unit that detects a fault(s) in a virtual machine(s) operating on a virtualized infrastructure management unit that manages a virtualized infrastructure; and
a control unit that instructs the virtualized infrastructure control unit to recreate a virtual machine(s) in which a fault(s) has occurred after an image file(s) of the virtual machine(s) in which the fault(s) has occurred is logically updated so that the image file(s) of the virtual machine(s) in which the fault(s) has occurred can be backed up.

2. The virtual network function management apparatus according to claim 1, wherein the control unit logically updates the image file(s) of the virtual machine(s) in which the fault(s) has occurred by requesting a predetermined orchestration apparatus to rename the virtual machine(s) in which the fault(s) has occurred.

3. The virtual network function management apparatus according to claim 1 or 2, wherein the virtual network function management apparatus performs processing for detaching a virtual connection port(s) of the virtual machine(s) in which the fault(s) has occurred.

4. The virtual network function management apparatus according to any one of claims 1 to 3, wherein the virtual network function management apparatus deletes, among virtual port information held on the virtualized infrastructure management unit side, virtual port information corresponding to a virtual port(s) included in the image file(s) of the virtual machine(s) in which the fault(s) has occurred.

5. The virtual network function management apparatus according to any one of claims 1 to 4, wherein the virtual network function management apparatus backs up the image file(s) of the virtual machine(s) in which the fault(s) has occurred independently of the processing for recreating the virtual machine(s).

6. A virtual network function providing system, comprising the virtual network function management apparatus according to any one of claims 1 to 5.

7. A healing method, comprising steps of:
detecting a fault(s) in a virtual machine(s) operating on a virtualized infrastructure management unit that manages a virtualized infrastructure; and
instructing, when a fault(s) has been detected in a virtual machine(s), the virtualized infrastructure control unit to recreate the virtual machine(s) in which the fault(s) has occurred after an image file(s) of the virtual machine(s) in which the fault(s) has occurred is logically updated so that the image file(s) of the virtual machine(s) in which the fault(s) has occurred can be backed up.

8. A program, causing a computer that functions as a virtual network function management apparatus to perform processing for:
detecting a fault(s) in a virtual machine(s) operating on a virtualized infrastructure management unit that manages a virtualized infrastructure; and
instructing, when a fault(s) has been detected in a virtual machine(s), the virtualized infrastructure control unit to recreate the virtual machine(s) in which the fault(s) has occurred after an image file(s) of the virtual machine(s) in which the fault(s) has occurred is logically updated so that the image file(s) of the virtual machine(s) in which the fault(s) has occurred can be backed up.
